Europäisches Patentamt

European Patent Office

Office européen des brevets

(11) Publication number: **0 172 720**
**A2**

## (12) EUROPEAN PATENT APPLICATION

(21) Application number: **85305746.1**

(22) Date of filing: **13.08.85**

(51) Int. Cl.⁴: **A 47 B 17/00**
**F 16 B 12/38**

(30) Priority: **17.08.84 US 641916**

(43) Date of publication of application:
**26.02.86 Bulletin 86/9**

(84) Designated Contracting States:
**DE FR GB IT**

(71) Applicant: **HAWORTH, INC.**
**One Haworth Center 1400 Highway M-40**
**Holland Michigan(US)**

(72) Inventor: **Kortering, Randall L.**
**2471 Valarie Drive**
**Zeeland Michigan(US)**

(72) Inventor: **Berry, Gordon C.**
**342 Sunset N.W.**
**Grand Rapids Michigan(US)**

(74) Representative: **Jackson, David Spence et al,**
**REDDIE & GROSE 16, Theobalds Road**
**London, WC1X 8PL(GB)**

(54) **Snaplock connection, e.g. for a drawer unit.**

(57) A removable accessory (6) such as a drawer unit can be mounted to the underside of a work surface (4) without the use of tools by engagement of a pair of front and rear slot and projection couplings (11, 12). A spring (38) automatically locks the accessory (6) to the work surface (4) when the projections (33, 41; 24) are fully engaged with the slots (14, 19). The front projection (33, 41) enters a wide portion (18) of the front slot (14) as the horizontal part (28) of the rear projection (24) enters the rear slot (19), and then a flange (41) on the front projection (33, 41) is trapped above a narrow portion (17) of the front slot (14) as the accessory (6) is pushed rearwards, and the spring (38) snaps up into its locking position against the front edge of the front slot (14).

./...

EP 0 172 720 A2

FIG. 3

.TITLE MODIFIED
**see front** page

TOOLLESS MOUNTING ARRANGEMENT

FIELD OF THE INVENTION

This invention relates to an improved arrangement for mounting a component such as a drawer unit to the underside of a work surface, and particularly to a snap lock connection between a drawer unit and the underside of a work surface. The mounting arrangement of this invention allows the drawer unit to be mounted or demounted without the use of tools.

BACKGROUND OF THE INVENTION

A variety of arrangements for mounting a component such as a drawer unit to the underside of a work surface are known. All such mounting arrangements require some means for securely suspending the component from the work surface, and means for locking the installed component to the underside of the work surface so that the component or drawer unit will not become disengaged from the work surface during ordinary use. Such units long have, and typically still do, utilize bolts or screws for securing the unit to the work surface. The mounting or demounting of the unit can hence be difficult and time consuming, and requires the use of tools such as wrenches, screwdrivers and the like.

Units having projections or hooks which engage slots in the work surface have also been used. However, a fastener such as a screw is needed to ensure that the projection remains in engagement with the slot. Installation of such fastener requires the use of a tool such as a screwdriver.

An object of the present invention is to provide an arrangement for mounting a component or accessory, such as a file cabinet or drawer unit, to the underside of a work surface without requiring the use of any tools such as a screwdriver or wrench.

A specific object of the present invention is to provide a snap-lock connection arrangement for securely mounting a drawer unit to the underside of a table top.

An additional object of the present invention is to provide a releasable self-locking mounting arrangement so that the accessory or component can be easily removed from the underside of a work surface and easily remounted thereon in a different location.

Other objects and purposes of the invention will be apparent upon examination of the accompanying drawings and study of the following specification.

BRIEF DESCRIPTION OF THE DRAWINGS

Figure 1 is a perspective view of a typical arrangement showing a drawer unit suspended from the underside of a work surface.

Figure 2 is a partial cross-sectional view of the mounting arrangement according to the invention, showing the component detached from the underside of the work surface.

Figure 3 is the same as Figure 2 except that the component is engaged with and locked to the underside of the work surface.

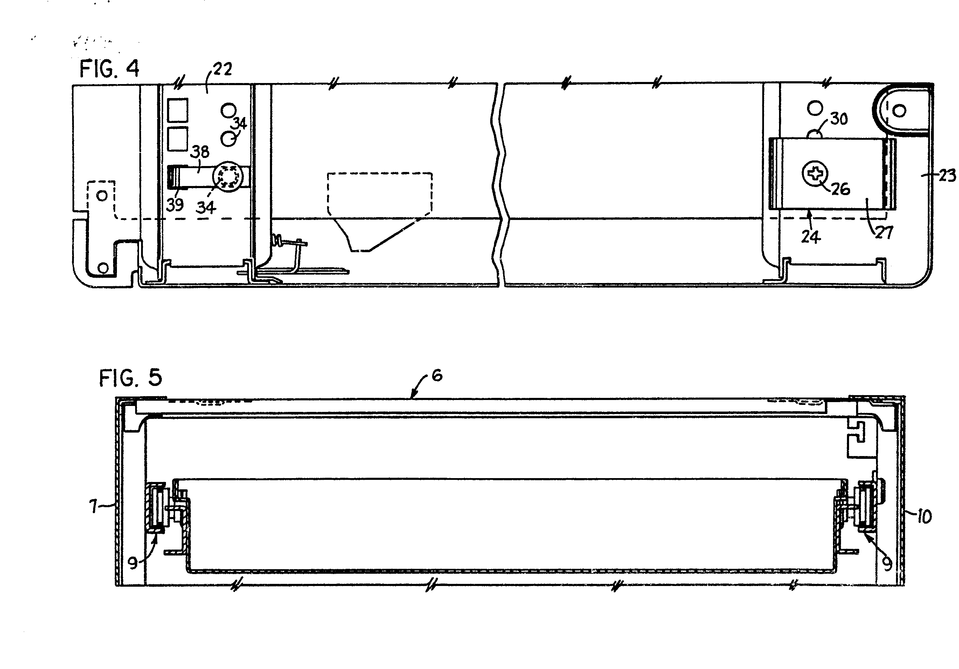

Figure 4 is a partial top view, partly in section, of a right side portion of the component shown substantially along the line IV-IV in Figure 2.

Figure 5 is a partial, front cross-sectional view of the component shown in Figures 2 and 3.

Figure 6 is a view taken along the line VI-VI in Figure 2.

Figure 7 is a view taken along the line VII-VII in Figure 2.

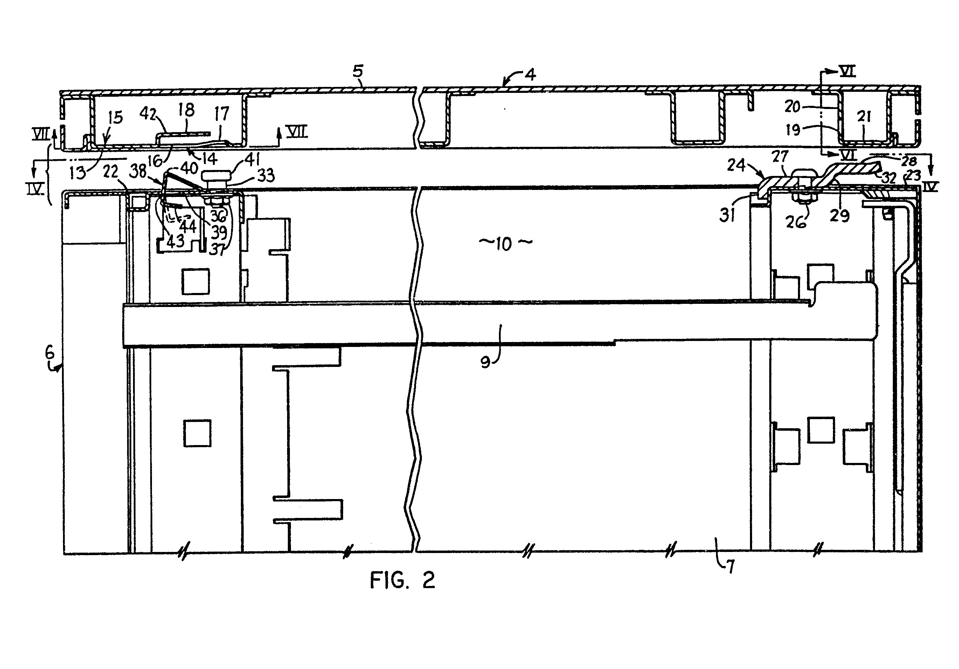

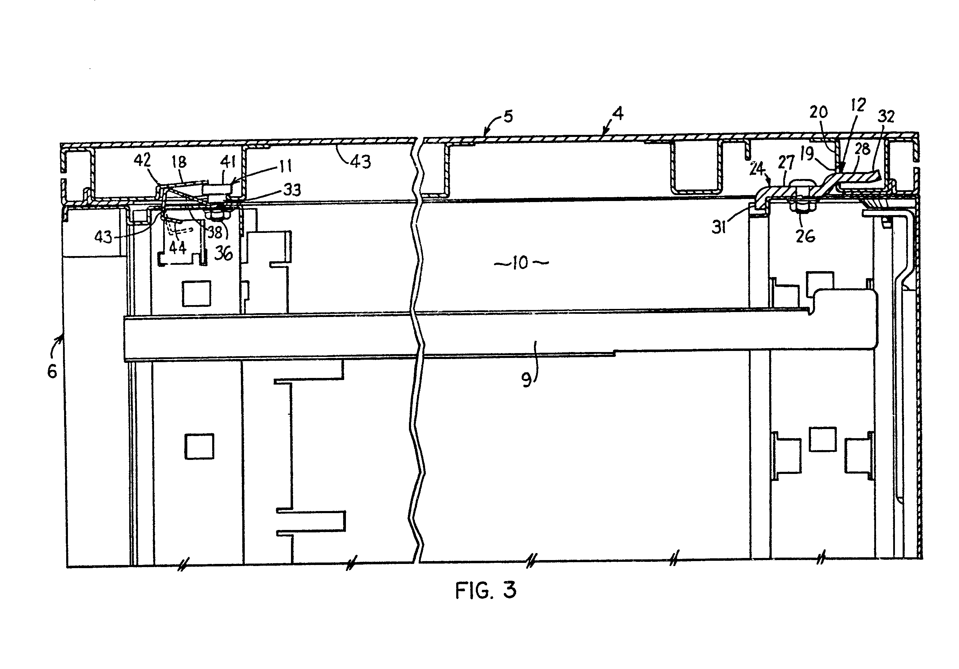

Certain terminology will be used in the following description for convenience in reference only and will not be limiting. For example, the words "upwardly", "downwardly", "rightwardly" and "leftwardly" will refer to directions in the drawings to which reference is made. The word "front" will refer to the end thereof from which the drawers are opened, namely the leftward side in Figures 2 and 3. This terminology will include the words above mentioned, derivatives thereof and words of similar meaning.

## SUMMARY OF THE INVENTION

The present invention relates to an improved mounting arrangement which includes a work surface and a removable component or accessory unit mounted on the underside of the work surface. The mounting arrangement includes a pair of front and rear slot-and-projection couplings for fixedly mounting the accessory unit to the underside of the work surface, and a spring for automatically locking the unit to the underside of the work surface without the use of tools. The spring locks the accessory unit by holding the projections in secure engagement with the corresponding slots.

In a preferred embodiment, the underside of the work surface has front and rear slots formed therein, and the top of the accessory unit has corresponding front and rear projections for engaging these slots. The spring is biased into the front slot between the front projection and the front end of the front slot, thereby locking the front projection in the rear end of the front slot. The rear end of the front slot has a raised ramplike cam along the edge thereof to create a snug frictional engagement with the front projection.

## DETAILED DESCRIPTION

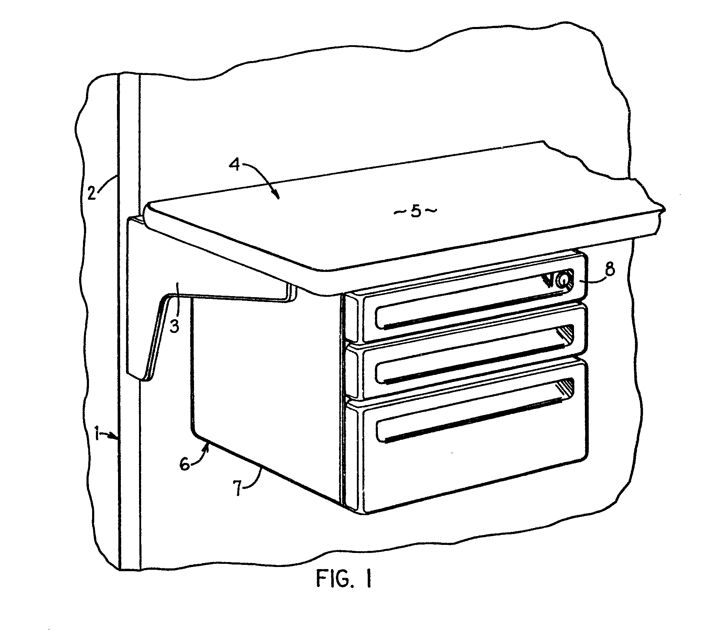

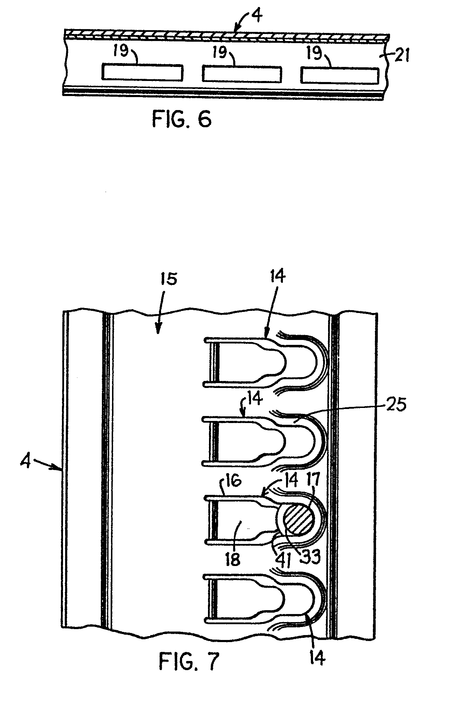

Referring to the drawings, Figure 1 shows a conventional arrangement 1 wherein an upright wall panel 2 has a plurality of cantilevered support arms 3 mounted thereon for supporting a work surface member or table top 4 having a substantially planar upper work surface 5. An accessory or component 6, such as a drawer unit or filing cabinet, is mounted to the underside of the work surface 4. The drawer unit 6 includes a housing 7 which supports a plurality of drawers 8 which can be opened from the front of the unit. As shown in Figure 5, the drawers 8 are mounted for reciprocal movement by means of conventional slide assemblies 9 connected between the drawers 8 and sidewalls 10 of the housing 7.

Figures 2 and 3 illustrate the mounting arrangement according to the present invention for mounting the drawer unit 6 in suspended relation below the work surface member 4. This mounting arrangement includes a pair of front projection-and-slot means 11 adjacent the upper front corners of the drawer unit 6, and a pair of rear projection-and-slot means 12 adjacent the upper rear corners of the drawer unit 6.

Each projection-and-slot means 11 includes a keyhole-shaped slot 14 which opens downwardly from the bottom wall or underside 13 of the adjacent front edge of the work surface member 4. This slot 14 is elongated in the front-to-back direction of the drawer unit 6 and work surface member 4. As shown in Figure 7, a plurality of front keyhole slots 14 are preferably
formed in a row along the bottom wall 13 in parallel
relation to the adjacent front edge of the work surface
member 4. Each front slot 14 has a front slot portion
16 and a rear slot portion 17. The front slot portion
16 is of greater width than the rear slot portion 17.

The bottom wall 13 is part of a metal channel
member 15 which comprises part of the work surface
member 4 and extends lengthwise thereof. The slots 14
are stamped out of the wall 13, and a part of the wall
13 is deformed upwardly to form a ramplike cam 25 (see
Figure 7) in surrounding relation to the rear slot
portion 17 so that the depth of the slot 14 tapers
(i.e., decreases) from the end of the rear slot portion
17 forwardly as shown in Figure 2. The front keyhole
slot 14 is substantially horizontal, and a keyhole cover
18 integral with the wall 13 and formed during the
stamping operation used to form the slots 14 covers each
of the front slots 14. The keyhole cover 18 is spaced
slightly upwardly from the bottom wall 13 and prevents
the insertion of fingers through the slot 14 into
dangerous positions.

The projection-and-slot means 11 also includes a
front projection or mounting pin 33 which is an upright
projection having an annular flange 41 at the upper end
thereof. The mounting pin 33 is fixedly secured into
one of a plurality of holes 34 in a front top wall 22 of
the drawer unit 6. The front top wall 22 extends across
the width of the unit 6 and spans the sidewalls 10. The
mounting pin 33 has a threaded lower end 36 which
extends through the hole 34, and a nut 37 threadedly
coupled to the threaded end 36 secures the pin 33 to the
front top wall 22. Prior to mounting of the pin 33, a spring plate 38 having a hole (not shown) therein is placed on the top wall 22 so that the hole in the spring plate 38 is aligned with the hole 34 in the front top wall 22, and the threaded lower end 36 of the mounting pin 33 is then extended therethrough so that the mounting pin assembly secures the spring plate 38 to the front top wall 22. The pin 33 has a shoulder directly above the lower threaded end, which shoulder abuts the spring plate to vertically locate the pin. The spring plate 38 extends forwardly and upwardly from the hole 34 of the top wall 22, is then bent downwardly into one of a plurality of upwardly opening front slots 39 formed in the top wall 22, and is then bent to extend substantially rearwardly below the top wall 22 so that the spring plate 38 is substantially hook-shaped in cross section. The spring plate 38 is biased to project upwardly beyond the top wall 22 as shown in Figure 2, but can be pressed downwardly so that it is substantially flush with the top wall 22 whereby the bent end thereof assumes the position shown by dotted lines in Figures 2 and 3.

The rear projection-and-slot means 12, located at the rear left and right corners of the upper side of the unit 6, includes a plurality of rear, frontwardly opening slots 19 formed in a front wall 20 of a channel member 21 which is part of the work surface member 4 and extends lengthwise thereof in parallel with the channel member 15. A projection member 24 which is substantially Z-shaped in cross section is secured by a nut and bolt fastener 26 extending through one of a plurality of rear mounting holes 30 to a rear top wall 23 of the drawer unit 6. The rear top wall 23 extends across the width of the drawer unit 6 and spans the sidewalls 10, in parallel with the front top wall 22.

The rear projection 24 comprises upper and lower horizontal portions 28 and 27 integral with and connected by a substantially vertically extending portion 29 which gives the rear projection 24 its cross-sectional Z shape. The lower horizontal portion 27 has an opening therethrough for the fastener 26, and has a downwardly turned end 31 which extends over a front edge of the top wall 23. The upper horizontal portion 28 of the rear projection 24 extends rearwardly and has a slightly upwardly bent end 32.

The mounting arrangement according to the present invention is assembled as follows. First, the slightly upwardly bent ends 32 of the rear projections 24 are slightly inserted into selected rear slots 19 to provide at least partial support for the rear end of the unit 6. The front end of unit 6 is then lifted upwardly so that the front mounting pins 33 are inserted through the front portion 16 of the front keyhole slots 14. The flange 41 at the uppermost end of the mounting pin 33 has a diameter slightly less than the width of the front slot portion 16, but greater than the width of the rear slot portion 17. Once the flanges 41 have been inserted upwardly completely through the front slot portions 16, the drawer unit 6 is then pushed rearwardly relative to the work surface member 4. This causes the upper horizontal portions 28 of the rear projections 24 to be slidably inserted more fully into the rear slots 19, and simultaneously causes the pins 33 to travel rearwardly along the length of the front slots 14 until they enter the slot end portions 17. Since the flange 41 is of greater diameter than the slot end portion 17, the front end of the drawer unit 6 is thereby suspended from the front end of the work surface member 4. In addition, the flange 41 travels upwardly along the tapered portion of the slot 14 along the cam part 25 to lift the top wall 22 substantially flush with the channel bottom wall 13. This also causes the front pins 33 to be snugly frictionally held in place. The drawer unit 6 is thus securely fitted to the underside of the work surface member 4.

As the pin 33 moves rearwardly in the front slot 14, the spring plate 38 is initially deformed toward the phantom position by the bottom wall 13 of the channel member 15. When the upper edge 40 (i.e. the first bend) of the spring plate 38 clears the front wall 42 of the slot 14, the spring plate 38 resiliently snaps upwardly into the front slot 14 as shown in Figure 3. By this means, the spring plate 38 locks the drawer unit 6 to the work surface 4 by preventing any significant forward movement of the drawer unit 6 relative to the work surface 4. Specifically, while the front face 43 of the spring plate 38 is normally slightly spaced from the front wall 42 of the slot 14, nevertheless slight forward movement of the unit 6 will cause wall 42 to abut wall 43 so as to prevent the pin 33 from moving forwardly back along the slot 14.

If it is desired to remove the drawer unit 6 from the work surface member 4, it is necessary to pull the lower end 44 of the spring plate 38 downwardly so that the spring plate assumes the phantom position shown in Figure 3 and hence is withdrawn from the slot 14. With the spring plate 38 thus withdrawn, the mounting pin 33 can travel forwardly along the slot 14 and the rear projection 24 can be withdrawn from the rear slot 19 by pulling the drawer unit 6 forwardly relative to the work surface member 4.

According to preferred embodiments of the invention, a pair of parallel rows of keyhole slots 14 and vertical slots 19 are formed at regular intervals along the underside of the work surface member 4 in the channel members 15 and 21 respectively, as shown in Figures 6 and 7. This allows the greatest flexibility in installing a variety of drawer units or other desired components as needed. The component or drawer unit 6 preferably has two mounting pins 33 at the left and right front corners thereof and two rear projections 24 mounted at left and right corners thereof.

The rear projection 24 need not be Z-shaped in cross section, but preferably has a portion which is at least L-shaped in cross section. For example, the vertically extending portion 29 of the projection 24 could be integrally formed on the rear top wall 23, eliminating the need for the lower horizontal portion 27 and fastener 26.

The spring plate 38 need not be mounted by the pin 33, and the precise shape of the spring means is not critical, so long as it has a self-locking action for preventing the front and rear slot-and-projection means 11 and 12 from becoming disengaged during normal use.

Although a particular preferred embodiment of the invention has been disclosed in detail for illustrative purposes, it will be recognized that variations or modifications of the disclosed apparatus, including the rearrangement of parts, lie within the scope of the present invention.

CLAIMS

1.   In a mounting arrangement including a work surface (4) and an accessory (6) removably mounted on the underside of said work surface (4), the improvement comprising front and rear slot-and-projection coupling means (11, 12) for releasably mounting said accessory (6) on the underside of said work surface (4), and spring means (38) for automatically locking said accessory (6) to said work surface (4) without the use of any tool, said spring means (38) maintaining said slot-and-projection means (11, 12) in engagement.

2.   A mounting arrangement according to claim 1, wherein said spring means comprises a spring plate (38) which releasably snaps into the front slot (16) and prevents any significant movement of said accessory (6) relative to said work surface (4).

3.   A mounting arrangement according to claim 2, wherein said spring plate (38) is substantially hook-shaped in cross section.

4.   A mounting arrangement according to claim 2, wherein said work surface (4) has parallel rows of front and rear slots (14, 19) formed on the underside thereof, and said accessory (6) has a plurality of both front and rear projections (31, 24) engageable with respective said front and rear slots (14, 19), said projections (31, 24) being fixed on top wall means (23) of said accessory (6).

5.   A mounting arrangement according to claim 4, wherein said front slots (14) open vertically downwardly and said rear slots (19) open horizontally forwardly, each said rear projection (24) being substantially L-shaped and having an upper portion (28) which projects rearwardly into said rear slot (19) when said accessory (6) is mounted to the underside of said work surface (4), and each said front projection (33) being an upright pin having a flange (41) at the upper end thereof, said flange (41) having a width less than the width of a front portion (18) of said front slot (14) but greater than the width of a rear portion (17) of said front slot (14), so that said flange (41) can be inserted through said front portion

(18) of the associated front slot (14) and then moved rearwardly over said rear portion (17) of said front slot (14) as said L-shaped rear projection (24) is moved rearwardly through the associated rear slot (19).

6.    A mounting arrangement according to claim 5, wherein the depth of said front slot (14) decreases from the rear end to the front end thereof so that said flange (41) moves upwardly as well as rearwardly during mounting of said accessory (6) to said work surface (4) so that top wall means (23) of said accessory (6) is brought into engagement with the underside of said work surface (4) and said upright pins (33) are snugly frictionally engaged with the underside of said work surface (4).

7.    In a mounting arrangement including a work surface (4) and a removable accessory (6) mounted on the underside of said work surface (4), the improvement which comprises: said work surface (4) has a substantially horizontal, downwardly opening, elongated front slot (14) formed on the underside thereof, said front slot (14) tapering in depth forwardly from the rear end thereof in the lengthwise direction of said front slot (14); said accessory (6) has a front upright projection (33) on top wall means thereof, said projection (33) having flange means (41) formed at the tip thereof, which front projection (33) is inserted through a forward end portion (18) of said front slot (14) on the underside of said work surface (4) and is then moved rearwardly and upwardly along said front slot (14) to said rear end thereof, so that said front projection is snugly held at said rear end of said slot; said accessory (6) further has self-locking releasable spring means (38) for resiliently locking said first projection (33) at the rear end of said front slot (14); and said work surface (4) has a substantially vertical, frontwardly opening rear slot (19) formed on the underside thereof, and said accessory has a rear, substantially horizontally extending projection (28) which is inserted into said rear slot (19) as said front projection (33) is inserted into said front slot (14), which rear projection (28) is locked into said rear slot (19) by said spring means (38).

8.    A mounting arrangement according to claim 7, wherein said spring means comprises a spring plate (38) which extends forwardly from said front projection (33), resiliently snaps into said front slot (14) as said front projection (33) moves rearwardly along said front slot (14), and is adapted to engage a front wall of said front slot (14) so as to prevent movement of said front projection (33) forwardly into said front slot (14).

9.    A mounting arrangement according to claim 8, wherein said spring plate (38) has means (44) for removing said spring from said front slot (14) to allow forward movement of said front and rear projections (33, 28) so that said accessory (6) can be released from the underside of said work surface (4).

10.    A mounting arrangement according to claim 8, wherein said work surface (4) has a pair of parallel front and rear, upwardly opening channel members (15, 21) secured to the underside of said work surface (4), said rear channel member (21) having a front wall (20) which defines said rear slot (19) therein, and said front channel member (15) having a bottom wall (13) which defines said front slot (14) therein, said bottom wall (13) of said front channel member (15) defining a cover (18) which extends over said slot (14) so that said spring plate (38) contacts the underside of said cover (18) when said spring plate (38) is in locked position, said cover (18) being integral with said bottom wall (13) of said front channel member (15).

0172720

1/5

~5~

FIG. I

FIG. 2

FIG. 3

0172720

FIG. 4

FIG. 5

FIG. 6

FIG. 7